(19) Europäisches Patentamt
European Patent Office
Office européen des brevets

(11) **EP 1 832 763 A2**

(12) **EUROPÄISCHE PATENTANMELDUNG**

(43) Veröffentlichungstag:
**12.09.2007 Patentblatt 2007/37**

(51) Int Cl.:
*F16C 33/30* (2006.01)     *F16C 39/06* (2006.01)

(21) Anmeldenummer: **07004112.4**

(22) Anmeldetag: **28.02.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **08.03.2006 DE 102006010617**

(71) Anmelder: **Schaeffler KG**
**91074 Herzogenaurach (DE)**

(72) Erfinder: **Glück, Stefan**
**97424 Schweinfurt (DE)**

(54) **Lager mit bevorzugter Ruhestellung**

(57)     Die Erfindung betrifft ein Lager mit einem Innenring (2) und einem Außenring (3), wobei ein magnetisches Element (5) vorgesehen ist, welches entweder mit dem Innenring (2) oder mit dem Außenring (3) im Wesentlichen drehfest verbunden ist. Dabei ist in wenigstens einem Bereich zwischen dem Innenring (2) und dem Außenring (3) ein Medium (6) vorgesehen, dessen Viskosität sich in Abhängigkeit eines dieses durchsetzenden Magnetfeldes ändert.

Fig. 1

Fig. 2

EP 1 832 763 A2

**Beschreibung**

**Gebiet der Erfindung**

Die folgende Erfindung bezieht sich auf ein Lager. Die Erfindung wird unter Bezugnahme auf Lager beschrieben, die beispielsweise in Waschmaschinen Anwendung finden können. Waschmaschinen und insbesondere Toplader-Waschmaschinen weisen eine Trommel auf, in welche die zu waschende Wäsche eingefüllt wird. Daneben ist in der Trommel eine Einfüllklappe vorgesehen, durch welche hindurch Wäsche in die Trommel eingeführt werden kann. Diese Einfüllklappe ist nicht in jeder Drehstellung der Trommel für den Benutzer zugänglich. Bei Verwendung herkömmlicher Lager zur Lagerung der Wäschetrommel, ist die Stellung der Wäschetrommel, in der sie nach einer Drehung stehen bleibt, vom Zufall abhängig.

Der vorliegenden Erfindung liegt daher die Aufgabe zugrunde, ein Lager zur Verfügung zu stellen, welches bewirkt, dass ein gegenüber einem anderen drehbares Element in einer bevorzugten Stellung zum Stillstand kommt. Im Fall einer Trommel für Waschmaschinen wäre dies eine Stellung, bei der die Einfüllklappe in der Trommel für den Benutzer zugänglich ist.

Eine andere Aufgabe der vorliegenden Erfindung besteht darin, ein Lager zur Verfügung zu stellen, welches eine gewisse Rasterung des Öffnungszustandes, beispielsweise wie von Türen oder Klappen, erzeugt.

Aus dem Stand der Technik sind verschiedene Möglichkeiten bekannt, um eine derartige Rasterung oder eine bevorzugte Stellung zu erreichen. Eine Möglichkeit ist eine mechanische Rasterung, wobei beispielsweise ein mechanisches Bremselement bewirkt, dass eine sich drehende Einheit des Lagers bei einem gewissen Punkt zum Stillstand kommt. Der Nachteil derartiger mechanischer Lösungen ist einerseits ein systembedingter hoher Verschleiß und andererseits unter Umständen auch eine hohe Geräuschentwicklung während des normalen Betriebs.

Eine weitere Vorgehensweise sieht einen Positionssensor vor, der mit einer Motorsteuerung kombiniert ist. Diese Lösung ist technisch aufwändig und daneben sind elektronische bzw. aktive Steuerungen nötig.

Eine weitere Aufgabe der Erfindung liegt darin, ein Lager zu schaffen, dessen Rasterung erst ab Drehzahlen nahe des Stillstandes greift und den Normalbetrieb mit höheren Drehzahlen möglichst wenig stört.

Diese Aufgaben werden durch den Gegenstand des unabhängigen Hauptanspruches 1 erreicht. Vorteilhafte Ausführungsformen und Weiterbildungen sind Gegenstand der Unteransprüche.

Das erfindungsgemäße Lager weist einen Innenring auf, sowie einen Außenring. Dabei ist ein magnetisches Element vorgesehen, welches entweder mit dem Innenring oder mit dem Außenring im Wesentlichen drehfest verbunden ist. Erfindungsgemäß ist in wenigstens einem Bereich zwischen dem Innenring und dem Außenring ein Medium vorgesehen, dessen Viskosität sich in Abhängigkeit eines dieses durchsetzenden Magnetfeldes ändert.

Das magnetische Element kann an einem stehenden Innen- oder Außenring vorgesehen sein oder auch einem sich bewegenden Innen- bzw. Außenring.

Vorzugsweise handelt es sich bei dem Medium um eine Flüssigkeit und besonders bevorzugt um eine magnetorheologische Flüssigkeit. Magnetorheologische Flüssigkeiten haben die Eigenschaft, dass sie ihre Viskosität um mehrere Größenordnungen in Abhängigkeit eines sie durchsetzenden Magnetfeldes ändern können. Der Ausdruck "magnetorheologisches Fluid" (MRF) bezeichnet damit Flüssigkeiten, die ähnlich wie Ferrofluide auf ein Magnetfeld reagieren, sich aber im Gegensatz zu diesem dabei verfestigen. Magnetorheologische Fluide bestehen beispielsweise aus einer Suspension von mikrometergroßen magnetischen Teilchen, die ein bis drei Größenordnungen größer sind als die Teilchen von Ferrofluiden. Die relativ großen Teilchen der magnetorheologischen Fluide bilden Ketten, wenn ein Magnetfeld angelegt wird. Dies erhöht die Viskosität der MRF und kann diese sogar verfestigen, wenn eine einwirkende Druckkraft nicht groß genug ist, um die Ketten zu brechen.

Bevorzugt ist ein sich in Richtung des magnetischen Elements erstreckender magnetisierbarer Vorsprung vorgesehen. Dies bedeutet, dass beispielsweise das magnetische Element am Innenring angebracht ist und der Vorsprung am Außenring. Bei einer Drehung des Innenrings gegenüber dem Außenring wird das magnetische Element pro Umdrehung einmal an dem Vorsprung vorbeigeführt. In dieser Drehstellung ist ein Abstand zwischen den beiden Elementen sehr gering und damit ein zwischen den beiden auftretendes Magnetfeld sehr hoch, wodurch in dem zwischen dem magnetischen Element und dem Vorsprung angeordneten Medium eine hohe Viskosität bewirkt wird.

Bevorzugt sind das magnetische Element und der Vorsprung in radialer Richtung wenigstens geringfügig voneinander beabstandet und in einen Zwischenraum zwischen dem magnetischen Element und dem Vorsprung ist das Medium angeordnet. Es wäre jedoch auch möglich, dass das magnetische Element beispielsweise gabelförmig ausgeführt ist, und der Vorsprung durch diese Gabel bzw. die Zacken dieser Gabel hindurch tritt.

Vorzugsweise weist der Vorsprung ein ferromagnetisches Material auf bzw. besteht aus einem ferromagnetischen Material. Auf diese Weise kann eine Verstärkung des magnetischen Feldes zwischen dem Vorsprung und dem magnetischen Element auftreten.

Durch die Anordnung des magnetischen Elements und des Vorsprungs wird erreicht, dass in einer bestimmten Drehstellung des Innenrings gegenüber dem Außenring eine erhöhte Viskosität des Mediums bewirkt wird und damit der Innenring gegenüber dem Au-

ßenring in dieser bevorzugten Drehstellung zum Stehen kommt und bevorzugt auch in dieser Stellung gehalten wird.

Bei einer weiteren bevorzugten Ausführungsform ist das magnetische Element ein Permanentmagnet. Auf diese Weise wird erreicht, dass der Innenring immer in einer bevorzugten Drehstellung zum Stehen kommt. Es wäre jedoch auch möglich, das magnetische Element als Elektromagneten auszuführen, um die Bremswirkung in einer bestimmten Drehstellung zu- oder abschalten zu können. Auch ist es möglich, über einen Elektromagneten die Bremskraft zu variieren.

Bei dieser Ausführungsform wäre der Elektromagnet bevorzugt an dem gegenüber der Umgebung ruhenden Ring angeordnet (Innen- bzw. Außenring).

Bei einer weiteren bevorzugten Ausführungsform ist an dem Außenring eine erste Aufnahmeteileinrichtung angeordnet und an dem Innenring eine zweite Aufnahmeteileinrichtung und die erste und die zweite Aufnahmeteileinrichtungen bilden einen Aufnahmeraum für das Medium. Dies bedeutet, dass das Medium räumlich durch die beiden Aufnahmeteileinrichtungen, welche zusammen einen bevorzugt flüssigkeitsdichten Aufnahmeraum bilden, begrenzt wird.

Bevorzugt wird wenigstens eine Aufnahmeteileinrichtung einteilig mit dem Außenring oder dem Innenring ausgebildet. Bei einer anderen vorteilhaften Ausführungsform ist wenigstens eine Aufnahmeteileinrichtung ein mit dem Außenring oder Innenring verbundener Gehäuseteil. Es ist jedoch auch möglich, dass eine Aufnahmeteileinrichtung einteilig mit einem Ring ausgebildet und die andere Aufnahmeteileinrichtung ein mit dem anderen Ring verbundenes Gehäuseteil ist.

Die vorliegende Erfindung ist weiterhin auf ein Lager mit einem Innenring und einem Außenring gerichtet, wobei ein magnetisches Element vorgesehen ist, welches entweder mit dem Innenring oder mit dem Außenring im Wesentlichen drehfest verbunden ist. Erfindungsgemäß ist das magnetische Element in einer radialen Richtung des Lagers bewegbar. Bei diesem erfindungsgemäßen Lager wird bei schnellen Drehungen des einen Lagerrings das magnetische Element durch die Fliehkräfte beispielsweise radial vom stehenden Ring weg gedrückt und auf diese Weise ein ungebremster Lauf des Lagers ermöglicht. Bei langsamerer Drehung bewegt sich das magnetische Element auf den stehenden Ring zu, beispielsweise radial nach innen und auf einen Vorsprung zu. Dies bewirkt, dass das Lager in einer bevorzugten Winkelstellung stehen bleibt.

Bevorzugt ist ein Vorspannmittel vorgesehen, welches das magnetische Element in Richtung der Drehachse des Wälzlagers vorspannt. Genauer gesagt kann bei langsamen Drehungen des Wälzlagers das magnetische Element in Richtung eines gegenüberliegenden Vorsprung vorgespannt und auf diese Weise erreicht werden, dass das Lager in einer bestimmten Drehstellung stehen bleibt.

Alternativ kann auch das magnetische Element feststehend ausgebildet sein und der Vorsprung in radialer Richtung beweglich.

Vorzugsweise ist in wenigstens einem Bereich zwischen dem Innenring und dem Außenring ein Medium vorgesehen, dessen Viskosität sich in Abhängigkeit eines dieses durchsetzenden Magnetfeldes ändert. Dabei handelt es sich insbesondere wiederum um eine magnetorheologische Flüssigkeit der oben beschriebenen Art. Durch die Verwendung einer derartigen Flüssigkeit kann die Bremswirkung bei langsamen Drehungen erheblich erhöht werden.

Die oben beschriebene Erfindung kann bei allen Lagergattungen, wie beispielsweise bei Wälz- oder Gleitlagern zum Einsatz kommen.

Die vorliegende Erfindung ist schließlich auf die Verwendung einer Flüssigkeit mit magnetorheologischen Eigenschaften für Lager gerichtet. Wie oben ausgeführt, eignen sich magnetorheologische Flüssigkeiten, deren Viskosität stark von einem an sie angelegten Magnetfeld abhängt, in besonderer Weise, um ein Lager gezielt abzubremsen oder in bevorzugten Drehstellungen zum Stillstand zu bringen.

Weitere Vorteile und Ausführungsformen ergeben sich aus den beigefügten Zeichnungen.

Darin zeigen:

Fig. 1    eine schematische Darstellung eines erfindungsgemäßen Lagers; und

Fig. 2    eine Draufsicht auf das Lager aus Fig. 1 entlang der Linie A-A.

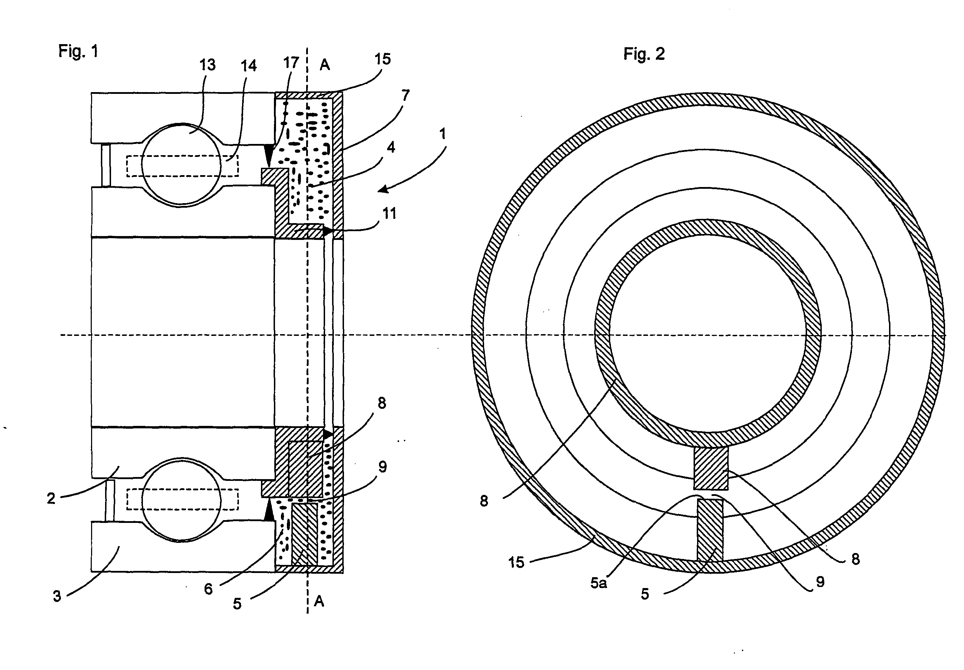

Fig. 1 zeigt ein erfindungsgemäßes Wälzlager 1. Dieses Wälzlager 1 weist einen Innenring 2 und einen Außenring 3 auf. Dabei ist der Außenring 3 mit einer Vielzahl von Wälzkörpern 13, die in einem Wälzkörperkäfig 14 angeordnet sind, drehbar gegenüber dem Innenring 2 gelagert.

An dem Außenring 3 ist eine erste Aufnahmeteileinrichtung 15 in Form eines Zusatzgehäuses 15 angeordnet. Dieses Gehäuse ist bei dieser Ausführungsform vergleichbar mit einem Sensorgehäuse bei Drehzahlsensorlagern. Bei einer anderen Ausführungsform wäre es jedoch auch möglich, die Aufnahmeteileinrichtung 15 einteilig mit dem Außenring 3 auszubilden, also beispielsweise den Bauraum für die Aufnahme der Rasteinrichtung direkt als Absatz in den Außenring 3 einzudrehen. Die erste Aufnahmeteileinrichtung 15 ist drehfest mit dem Außenring 3 verbunden.

An dem Innenring 2 ist eine zweite Aufnahmeteileinrichtung 11 in Form eines inneren Gehäuseteils angeordnet und drehfest mit dem Innenring 2 verbunden. Auch hier wäre es in einer weiteren Ausführungsform möglich, die zweite Aufnahmeteileinrichtung 11 als Drehfläche direkt in den Innenring 2 zu integrieren. Auf der zweiten Aufnahmeteileinrichtung 11 befindet sich mindestens ein Vorsprung 8 bzw. Zahn, der vorteilhafterweise aus einem ferromagnetischen Material besteht.

Die erste Aufnahmeteileinrichtung 15 ist mit einem Deckel 7 verschlossen und so ausgeführt, das sich zusammen mit der ersten Aufnahmeteileinrichtung 15, der zweiten Aufnahmeteileinrichtung 11 sowie zwei Dichtungen 17, ein flüssigkeitsdichter Raum 4 ergibt, der mit einer magnetorheologischen Flüssigkeit 6 gefüllt ist.

An der ersten Aufnahmeteileinrichtung 15 ist wenigstens ein magnetisches Element in Form eines Permanentmagnets 5 angeordnet. Es wäre jedoch auch möglich, den Permanentmagneten 5 an der zweiten Aufnahmeteileinrichtung 11 anzuordnen und den Vorsprung 8 an der ersten Aufnahmeteileinrichtung 15. Zwischen dem Permanentmagneten 5 und der zweiten Aufnahmeteileinrichtung 11 bzw. dem Vorsprung 8 bildet sich in einer bestimmten Drehstellung ein Spalt 9, in dem sich ebenfalls magnetorheologische Flüssigkeit 6 befindet.

Die Breite dieses Spalts 9 wird die durch die Drehstellung des Innenrings 2 gegenüber dem Außenring 3 so beeinflusst, dass er sehr schmal wird, wenn der Vorsprung 8 die Position des magnetischen Elements 5 erreicht. Dadurch wird das magnetische Feld des Magneten in dem Vorsprung 8 gebündelt und die magnetische Flussdichte in dem Spalt 9 steigt an. Dies erhöht die Viskosität der magnetorheologischen Flüssigkeit 6 in dem Spalt 9 immer zu den Zeitpunkten, zu denen sich der Vorsprung 8 und das magnetische Element 5 gegenüberstehen bzw. begegnen.

Durch die dadurch erhöhte Reibung wird das Drehmoment von der zweiten Aufnahmeteileinrichtung 11 auf das magnetische Element 5 bzw. die erste Aufnahmeteileinrichtung 15 übertragen und damit der Innenring des Lagers für die kurze Begegnungszeit gebremst.

Dreht sich das Lager sehr langsam, dann reicht das während des kurzen Bremsvorgangs übertragene Drehmoment aus, um das Lager in der Position anzuhalten, in der sich das magnetische Element 5 und der Vorsprung 8 am nächsten sind. Das Lager bleibt in dieser definierten Position stehen. Um wieder anlaufen zu können, muss nun eine gewisse Kraft aufgebracht werden, um das magnetische Element 5 von dem Vorsprung 8 wegzudrehen. Das Lager wird also im Stillstand an der Vorzugsposition gehalten.

Bei der in Fig. 1 gezeigten Ausführungsform ist das magnetische Element 5 und der Vorsprung 8 in radialer Richtung des Lagers fest. Es wäre jedoch auch möglich, beispielsweise das magnetische Element 5 in radialer Richtung des Lagers beweglich zu gestalten, sodass sich beispielsweise bei hohen Drehzahlen des Lagers der Spalt 9 zwischen dem magnetischen Element 5 und dem Vorsprung 8 vergrößert und sich erst bei kleinen Drehzahlen die Breite des Spalts 9 verringert. Besonders vorteilhaft wäre es in diesem Fall, das magnetische Element 5 mit einem Vorspannelement, wie einer Feder, radial auf den stehenden Ring vorzubelasten, um zu erreichen, dass bei geringen Drehzahlen das magnetische Element 5 in Richtung des Vorsprungs 8 wandert. Auf diese Weise kann erreicht werden, dass bei hohen Drehzahlen die Drehbewegung kaum durch das magnetische Element 5 und dem Vorsprung 8 beeinflusst wird.

Generell ist die Rast- und Haltekraft des Lagers abhängig von der Stärke des Magneten, dem Material des Vorsprungs, der Spaltbreite, -höhe und -länge, der verwendeten magnetorheologischen Flüssigkeit und dem Material sowie der Form des Vorsprungs 8.

Wie eingangs erwähnt, wäre auch möglich, das magnetische Element 5 durch eine Spule zu ersetzen, um auf diese Weise die Rasterung elektrisch ein- und ausschalten zu können. Bei einer weiteren Ausführungsform könnte auch ein Streublech oder ähnliches in den Spalt eingeschoben werden und damit die Rasterung ausgeschaltet oder abgeschwächt werden.

Die Anzahl R der Raststellungen lässt sich variieren über die Anzahl Z der Vorsprünge 8 und die Anzahl M der Magneten 5. Für kleine Z und R ergibt sich die Anzahl der Raststellungen zu

$$R = Z + M - 1.$$

Wenn jedoch die Anzahl der Zähne oder der Magnete 5 einen bestimmten Wert überschreitet, beginnen sich die einzelnen Raststellungen gegenseitig zu beeinflussen und es bilden sich unter Umständen Zwischenstellungen oder Bereiche ohne wirksame Rasterung aus.

Für den Grenzfall sehr hoher Zahlen von Magnetelementen 5 oder Vorsprünge 8, beispielsweise in Form eines durchgehenden Eisenrings, würde sich ein gleichmäßig gebremstes Lager ohne wahrnehmbare Rasterung ergeben.

Fig. 2 zeigt eine Draufsicht auf das erfindungsgemäße Lager entlang der Linien A-A aus Fig. 1. Man erkennt, dass der Abstand zwischen einer Oberfläche 5a des magnetischen Elements und der zweiten Aufnahmeteileinrichtung 11 nur in demjenigen Bereich sehr gering ist, an dem der Vorsprung 8 dem magnetischen Element 5 gegenübersteht. Bedingt durch diesen geringen Abstand bzw. die geringe Spaltbreite steigt, wie erwähnt, die Viskosität des Mediums 6, das in diesem Bereich angeordnet ist, stark an und auf diese Weise wird die Bremswirkung erhöht.

Sämtliche in den Anmeldungsunterlagen offenbarten Merkmale werden als erfindungswesentlich beansprucht, sofern sie einzeln oder in Kombination gegenüber dem Stand der Technik neu sind.

**Bezugszeichenliste**

1    Wälzlager
2    Innenring
3    Außenring
4    flüssigkeitsdichter Raum

5      magnetisches Element
5a     Oberfläche des magnetischen Elements 5
6      magnetorheologische Flüssigkeit
7      Deckel
8      Vorsprung
9      Spalt
11     zweite Aufnahmeteileinrichtung
13     Wälzkörper
14     Wälzlagerkäfig
15     erste Aufnahmeteileinrichtung
17     Dichtung

**Patentansprüche**

1. Lager mit einem Innenring (2) und einem Außenring (3), wobei ein magnetisches Element (5) vorgesehen ist, welches entweder mit dem Innenring (2) oder mit dem Außenring (3) im Wesentlichen drehfest verbunden ist,
**dadurch gekennzeichnet, dass**
in wenigstens einem Bereich zwischen dem Innenring (2) und dem Außenring (3) ein Medium (6) vorgesehen ist, dessen Viskosität sich in Abhängigkeit eines dieses durchsetzenden Magnetfeldes ändert.

2. Lager nach Anspruch 1,
**dadurch gekennzeichnet, dass**
das Medium (6) eine magnetorheologische Flüssigkeit ist.

3. Lager nach wenigstens einem der vorangegangenen Ansprüche,
**dadurch gekennzeichnet, dass**
ein sich in Richtung des magnetischen Elements (5) erstreckender magnetisierbarer Vorsprung (8) vorgesehen ist.

4. Lager nach Anspruch 3,
**dadurch gekennzeichnet, dass**
das magnetische Element (5) und der Vorsprung (8) in radialer Richtung des Lagers wenigstens geringfügig voneinander beabstandet sind und in einem Zwischenraum (9) zwischen dem magnetischen Element (5) und dem Vorsprung (8) das Medium (6) angeordnet ist.

5. Lager nach wenigstens einem der vorangegangenen Ansprüche 3 - 4
**dadurch gekennzeichnet,dass**
der Vorsprung (8) ein ferromagnetisches Material aufweist.

6. Lager nach wenigstens einem der vorangegangenen Ansprüche,
**dadurch gekennzeichnet, dass**
das magnetische Element (5) ein Permanentmagnet (5) ist.

7. Lager nach wenigstens einem der vorangegangenen Ansprüche,
**dadurch gekennzeichnet, dass**
an dem Außenring eine erste Aufnahmeteileinrichtung (15) angeordnet ist und an dem Innenring eine zweite Aufnahmeteileinrichtung (11) und die erste und zweite Aufnahmeteileinrichtung einen Raum (4) für das Medium (6) bilden.

8. Lager nach Anspruch 7,
**dadurch gekennzeichnet, dass**
der Raum (4) im Wesentlichen flüssigkeitsdicht ist.

9. Lager nach wenigstens einem der vorangegangenen Ansprüche 7 - 8,
**dadurch gekennzeichnet, dass**
wenigstens eine Aufnahmeteileinrichtung (15, 11) einteilig mit dem Au-ßenring (2) oder dem Innenring (3) ausgebildet ist.

10. Lager nach wenigstens einem der vorangegangenen Ansprüche 7 - 9,
**dadurch gekennzeichnet, dass**
wenigstens eine Aufnahmeteileinrichtung (15, 11) ein mit dem Außenring (2) oder dem Innenring (3) verbundenes Gehäuseteil ist.

11. Lager mit einem Innenring (2) und einem Außenring (3), wobei ein magnetisches Element (5) vorgesehen ist, welches entweder mit dem Innenring (2) oder mit dem Außenring (3) im Wesentlichen drehfest verbunden ist,
**dadurch gekennzeichnet, dass**
das magnetische Element (5) in einer radialen Richtung des Lagers bewegbar ist oder das magnetische Element (5) feststehend ausgebildet ist.

12. Lager nach Anspruch 11,
**dadurch gekennzeichnet, dass**
ein Vorspannmittel vorgesehen ist, welches das magnetische Element (5) in Richtung der Drehachse des Lagers (1) vorspannt.

13. Lager nach wenigstens einem der vorangegangenen Ansprüche 11 - 12,
**dadurch gekennzeichnet, dass**
in wenigstens einem Bereich zwischen dem Innenring (2) und dem Außenring (3) ein Medium (6) vorgesehen ist, dessen Viskosität sich in Abhängigkeit eines dieses durchsetzenden Magnetfeldes ändert.

14. Verwendung einer Flüssigkeit mit magentorheologischen Eigenschaften für ein Lager.

Fig. 1

Fig. 2

EP 1 832 763 A2